# EUROPEAN PATENT APPLICATION

(11) **EP 3 398 739 A1**
(43) Date of publication of application: **07.11.2018**
(21) Application number: 18167414.4
(22) Date of filing: 16.04.2018
(51) Int. Cl.: B26D 1/04, B26D 7/01, B29C 65/00, B31F 7/00, B29K 705/02, B29C 65/02, B29C 65/36

(54) **CUTTING DEVICE FOR CUTTING A SHEET OF PACKAGING MATERIAL**

(30) Priority: 26.04.2017 EP 17168248
(71) Applicant: Tetra Laval Holdings & Finance S.A., 1009 Pully (CH)
(72) Inventor: ALGERI, Pierpaolo, 42048 Rubiera (IT); MACINI, Nicola, 41122 Modena (IT)
(74) Representative: Tetra Pak - Patent Attorneys SE

(57) **Abstract**

A cutting device for cutting a sheet of packaging material (41) comprises a plate (50) arranged for receiving said sheet of packaging material (41), a guiding arrangement (51) extending across said plate (50), a slide member (57) movable on said guiding arrangement (51) and supporting a cutting tool (58) arranged for cutting said sheet of packaging material (41), said cutting tool (58) forming an acute angle (β) with respect to a plane (A) defined by said plate, said cutting tool (58) comprising a rear portion connected to said slide member (57) and a front portion (59) protruding from said slide member (57) and at least partly received in a groove (60) of said plate (50), wherein said slide member (57) also supports a pushing member (64) arranged for pushing said sheet of packaging material (41) against said plate (50).

## Description

The present invention relates to a cutting device for cutting a sheet of packaging material, in particular a sheet of packaging material to be spliced to another sheet of packaging material in a splicing unit of a packaging machine.

Packaging machines are known which are provided with a splicing unit for splicing together a first sheet of packaging material and a second sheet of packaging material, during uninterrupted continuous production of sealed packages of pourable food products, such as milk, tomato puree, yoghurt, fruit juices, wine, tea, etc.

The packaging material has a multi-layered structure including a fiber-based layer made of a material such as cardboard, which is coated on either side with a heat-sealable plastics material such as polyethylene. When the packaging material is to be used for the aseptic packaging of pourable products such as milk treated at ultra-high temperature (UHT milk), the face of the packaging material destined to be placed in contact with the food product is also provided with a layer of barrier material such as aluminium, which is in turn covered with a layer of plastics material such as polyethylene.

The first sheet of packaging material is continuously fed into the packaging machine.

The first sheet of packaging material is sterilized with a sterilizing agent such as hydrogen peroxide, which is thereafter removed by evaporation. The sterile first sheet of packaging material is maintained in an aseptic chamber, then longitudinally sealed to form a continuous tube, which is filled with liquid food product to be packaged. The tube is then clamped and transversely sealed at regular intervals. The middle portions of the transversely sealed bands of the first sheet of packaging material are cut to separate individual semi-finished pillow-shaped packs from the continuous tube. The packs are then mechanically folded to produce finished packages.

The continuous feed of packaging material is achieved by unwinding the first sheet of packaging material from a first supply reel. The first sheet of packaging material passes through a magazine composed of a series of fixed rollers and vertically movable dancing rollers, before passing through a sterilization unit, in which the first sheet of packaging material is sterilized, and a forming unit in which opposite longitudinal edges of the first sheet of packaging material are sealed to each other to form a continuous, longitudinally-sealed product-filled tube, as described above.

When the first supply reel is almost exhausted, a trailing end of the first sheet of packaging material is cut transversely by a cutting tool.

A leading end of the second sheet of packaging material is unwound from a new reel and is prepared for splicing in a way that will be better explained below.

Subsequently, the leading end of the second sheet of packaging material is superimposed on the trailing end of the first sheet of packaging material and is spliced, for example by heat sealing, to the trailing end of the first sheet of packaging material. During the time the splicing operation takes place, the packaging machine continues to produce packages uninterruptedly, by drawing the first sheet of packaging material from the magazine. This causes the dancing rollers to move upwardly as the packaging material is used by the machine. When the splicing operation is completed, the second sheet of packaging material is drawn through the magazine and through the successive machine stations by the first sheet of packaging material. The dancing rollers return to their normal lowered position. In this way, the machine produces the packages with no interruption.

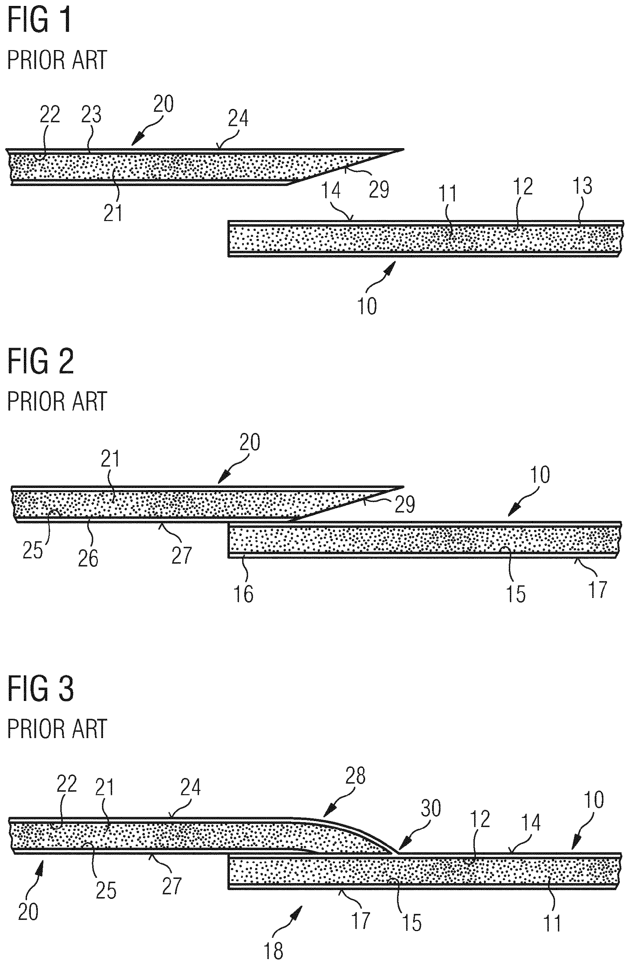

EP1184311 discloses a method for splicing together a first sheet of packaging material and a second sheet of packaging material. As shown in Figures 1 to 3, the first sheet of packaging material 10 comprises a fiber-based layer 11 having a first side 12 covered by a first polymer layer 13, e.g. polyethylene, defining an inner surface 14 destined to come into contact with a food product to be packaged. The fiber-based layer 11 of the first sheet of packaging material 10 also has a second side 15 covered by at least one second polymer layer 16, e.g. polyethylene, defining an outer surface 17.

Similarly, the second sheet of packaging material 20 comprises a fiber-based layer 21 having a first side 22 covered by a first polymer layer 23, e.g. polyethylene, defining an inner surface 24 destined to come into contact with a food product to be packaged. The fiber based layer 21 of the second sheet of packaging material 20 also has a second side 25 covered by at least one second polymer layer 26, e.g. polyethylene, defining an outer surface 27.

The second sheet of packaging material 20 is prepared for splicing to the first sheet of packaging material 10 by cutting a leading end portion 28 of the second sheet of packaging material 20 to form an undercut surface 29. The cutting step is carried out in such a manner as to define an acute angle between the inner surface 24 of the second sheet of packaging material 20 and the undercut surface 29. The acute angle defined between the inner surface 24 of the second sheet of packaging material 20 and the undercut surface 29 is comprised between 10 degrees and 40 degrees and is preferably comprised between 15 degrees and 25 degrees.

Subsequently, the undercut surface 29 is superimposed onto a trailing end portion 18 of the first sheet of packaging material. In this position, as illustrated in Figure 2, the outer surface 27 of the second sheet of packaging material 20 is in contact with the inner surface 14 of the first sheet of packaging material 10.

With reference to Figure 3, the undercut surface 29 of the second sheet of packaging material 20 is then bonded to the trailing end portion 18 of the first sheet of packaging material 10. In practice, this is done by applying heat and pressure to the trailing end portion 18 of the first sheet of packaging material 10 and to the leading end portion 28 of the second sheet of packaging material 20, with any suitable technique. For example, if the packaging material is of the type used for the aseptic packaging of pourable products and provided with an aluminium barrier layer, induction heating or impulse heating can be used.

In this way, a splice 30 is produced, in which no fibers of the fiber-based layer 21 are exposed to the product during the packaging process. This is achieved by sealing the undercut surface 29 of the second sheet of packaging material 20 to the inner surface 14 of the first sheet of packaging material 10. It is important to note that in this way, the inner surface 14 of the first sheet of packaging material 10 and the inner surface 24 of the second sheet of packaging material 20 together define an integral, continuous surface.

In the known packaging machines, in order to obtain the undercut surface, the second sheet of packaging material is cut by means of a cutting device.

The cutting device comprises a plate which receives the second sheet of packaging material.

The cutting device also comprise a guide connected to the plate.

A slide is movable on the guide. In particular, the slide can be manually moved along the guide by an operator who has to prepare the second sheet of packaging material for splicing.

The slide supports a cutting tool arranged for cutting the second sheet of packaging material.

In particular, the cutting tool comprises a rear portion fixed to the slide and a front portion projecting from the slide.

The cutting tool forms an acute angle with respect to the plate (and to the second sheet of packaging material resting thereon) and is, therefore, able to make the undercut surface in the leading edge of the second sheet of packaging material.

The plate is provided with a groove, parallel to the guide, which receives the front portion of the cutting tool.

During operation, the operator moves the slide from one side of the guide to the other side of the guide whilst the second sheet of packaging material is interposed between the plate and the slide. In this way, the cutting tool cuts the second sheet of packaging material and creates the undercut surface in the leading edge of the second sheet of packaging material.

A drawback of the known cutting units is that the second sheet of packaging material is subject to a certain degree of deformation when interacting with the cutting tool. The deformation of the second sheet of packaging material may be due to the fact that during the cutting operation the second sheet of packaging material does not perfectly rests on the plate, but creates "curves" or "waves", in particular in the region of the groove, i.e. where the cutting tool contacts the second sheet of packaging material. In this way, the acute angle formed between the inner surface of the second sheet of packaging material and the undercut surface has a value that differs from a desired value (i.e. the value of the acute angle that the cutting tool forms with the plate). In particular, the value of the above-mentioned angle can be bigger that the desired value.

If the value of the above-mentioned angle is bigger than the desired value it may happen that the amount of polymer of the first polymer layer of the second sheet of packaging material that extends beyond the fiber-based layer at the undercut surface in not enough to "cover" the fiber-based layer during the splicing operation, i.e. when the first sheet of packaging materials is sealed to the second sheet of packaging material. This may cause fibers of the fiber-based layer to be exposed to the product during the packaging process, which may lead to contamination.

It is to be noted that the smaller is the above-mentioned angle, the bigger is the amount of polymer of the first polymer layer of the second sheet of packaging material that is available - once melted during the splicing operation - for covering the fiber-based layer.

As clearly shown in Figures 1 and 2, the above-mentioned amount of polymer is formed by the polymer arranged at the "tip" formed by the inner surface of the second sheet of packaging material and the undercut surface.

The first sheet of packaging material and the second sheet of packaging material form a "step" at the splice, due to the fact that they are mutually superimposed. However, since the undercut surface contacts the inner surface of the second sheet of packaging material, a connection portion is defined between the first sheet of packaging material and the second sheet of packaging material, the connecting portion being intended to provide a smoother transition at the "step".

The first sheet of packaging material and the second sheet of packaging material are pressed one against the other (for example by rollers) in order to longitudinally seal the packaging material and form the tube.

If the value of the above-mentioned angle is bigger than the desired value it may happen that the connection portion is very steep. This may create an uneven pressure on the packaging material so impairing the forming of the tube.

An object of the invention is to improve the known cutting devices for cutting a sheet of packaging material, in particular a sheet of packaging material to be spliced to another sheet of packaging material in a splicing unit of a packaging machine.

Another object of the invention is to provide a cutting device for cutting a sheet of packaging material, in particular a sheet of packaging material to be spliced to another sheet of packaging material in a splicing unit of a packaging machine, which is able create in the sheet of packaging material an undercut surface that forms with a side surface of the packaging material an acute angle having a value that does not significantly differs from a desired value.

According to the invention there is provided a cutting device for cutting a sheet of packaging material, comprising a plate arranged for receiving said sheet of packaging material, a guiding arrangement extending across said plate, a slide member movable on said guiding arrangement and supporting a cutting tool arranged for cutting said sheet of packaging material, said cutting tool forming an acute angle with respect to a plane defined by said plate, said cutting tool comprising a rear portion connected to said slide member and a front portion protruding from said slide member and at least partly received in a groove of said plate, characterized in that said slide member also supports a pushing member arranged for pushing said sheet of packaging material against said plate.

Owing to the invention, during the cutting operation, the sheet of packaging material is clamped between the pushing member and the plate. In this way, the sheet of packaging material is substantially prevented from moving with respect to the plate and the cutting tool. In particular, the sheet of packaging material does not detach from the plate and so does not forms "curves" or "waves" as in the known cutting devices.

In this way, the cutting device makes in the sheet of packaging material an undercut surface that forms with a side surface of the sheet of packaging material an acute angle having a value that substantially corresponds to a pre-set value. In other words, it is possible to control the value of the above-mentioned angle with high accuracy. This greatly improves the subsequent splicing of the sheet of packaging material to another sheet of packaging material.

A preferred, non-limiting embodiment of the invention will be described by way of example with reference to the accompanying drawings, in which:
Figure 1 to 3 are schematic cross section showing the steps of a known method for splicing a first sheet of packaging material and a second sheet of packaging material;
Figure 4 is a perspective side view of a cutting device for cutting a sheet of packaging material;
Figure 5 is a cross section of the cutting device of Figure 4.

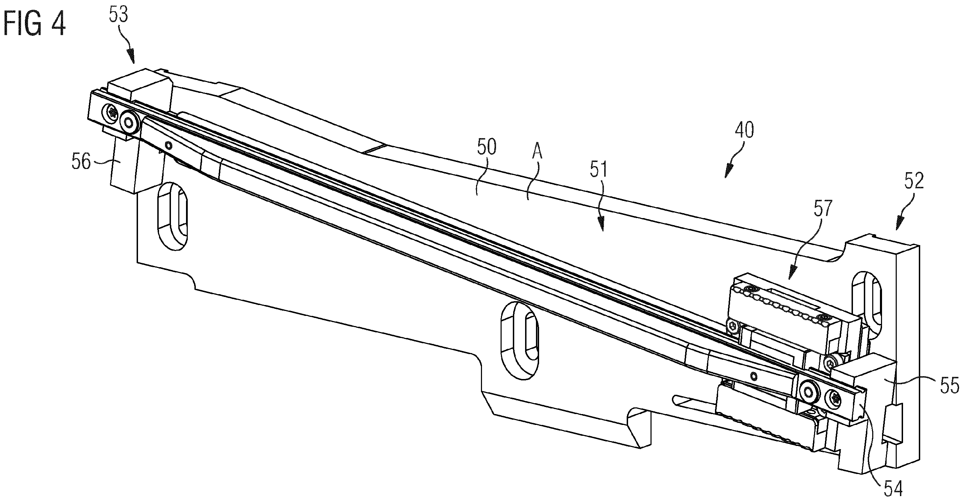

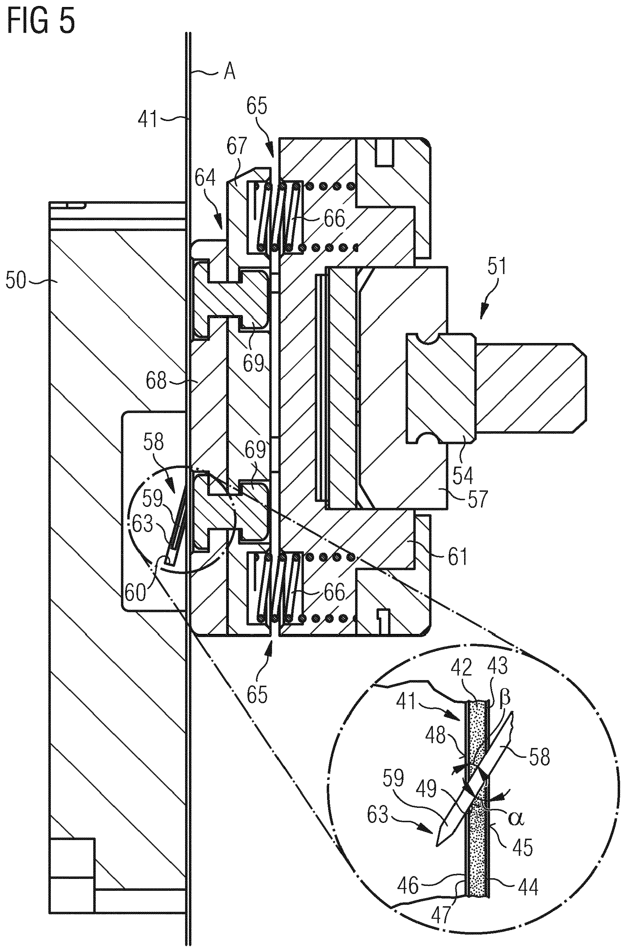

With reference to Figures 4 and 5 there is shown a cutting device 40 for cutting a sheet of packaging material 41, in particular a sheet of packaging material to be spliced to another sheet of packaging material in a splicing unit of a packaging machine.

The sheet of packaging material 41 comprises a fiber-based layer 42 having a first wall 43 covered by a first polymer layer 44, e.g. polyethylene, defining a first side surface 45 of the sheet of packaging material 41. The fiber-based layer 42 also has a second wall 46 covered by at least one second polymer layer 47, e.g. polyethylene, defining a second side surface 48 of the sheet of packaging material 41.

In particular, the first side surface 45 may form the inner surface of a package to be obtained from the sheet of packaging material 41 and the second side surface 48 may form the outer surface of the package.

The sheet of packaging material 41 may also comprise a layer of light and/or gas barrier material (not shown), e.g. aluminium, which is interposed between the first polymer layer 44 and a further polymer layer, e.g. polyethylene. In this case the first side surface is defined by the further polymer layer.

The cutting device 40 comprises a plate 50 arranged for receiving the sheet of packaging material 41.

The cutting device 40 further comprises a guiding arrangement 51 extending across the plate 50.

The guiding arrangement 51 extends between a first end region 52 of the plate 50 and a second end region 53 of the plate 50, opposite the first end region 52.

The guiding arrangement 51 comprises a bar 54 supported by a first supporting block 55 fixed to the plate 50 at the first end region 52 and by a second supporting block 56 fixed to the plate 50 at the second end region 53.

The cutting device 40 further comprises a slide member 57 movable on the guiding arrangement 51 and supporting a cutting tool 58 arranged for cutting the sheet of packaging material 41.

The slide member 57 is coupled to the bar 54 by means of recirculating ball bearings (not-shown).

The first supporting block 55 and the second supporting block 56 are arranged at a distance that is equal to, or bigger than, the transversal dimension of the sheet of packaging material 41. In this way, during operation, the sheet of packaging material 41 is received between the first supporting block 55 and the second supporting block 56.

In addition, during operation, the sheet of packaging material is positioned between the slide member 57 and the plate 50.

The cutting tool 58 forms an acute angle β with a plane A defined by the plate 50, in particular by a surface of the plate 50 intended to receive the sheet of packaging material 41.

The cutting tool 58 comprises a rear portion (not shown) connected to the slide member 57 and a front portion 59 protruding from the slide member 57.

The rear portion 58 is fixed, i.e. integral, to a body 61 of the slide member 57 and does not move with respect to the body 61 when the slide member 57 moves along the guiding arrangement 51 in order to cut the sheet of packaging material 41.

The front portion 59 is provided with a sharp cutting edge 63.

The front portion 59 is at least partly received in a groove 60 of the plate 50.

The groove 60 is parallel to the guiding arrangement 51.

The cutting device 40 further comprises a pushing member 64 arranged for pushing the sheet of packaging material 41 against the plate 50.

The pushing member 64 is supported by the slide member 57.

In this way, the pushing member 64 moves together with the slide member 57, when the slide member 57 is advanced along the guiding arrangement 51.

The pushing member 64 is connected to the body 61 so as to be movable with respect to the slide member 57.

Guide elements (not shown) are interposed between the slide member 57 and the pushing member 64 so as to guide movement of the pushing member 64 with respect to the slide member 57.

The guide elements project from the slide member 57 towards the plate 50.

In particular, the guide elements may comprise guide bars.

Resilient elements 65 are interposed between the slide member 57 and the pushing member 64.

In particular, the resilient elements 65 are interposed between the body 61 and the pushing member 64.

The resilient element may comprise springs 66.

The resilient elements 65 keeps the pushing member 64 in an extended configuration, in which the pushing member 64 is at a maximum distance from the slide member 57, i.e. from the body 61.

The resilient elements 65 allow the pushing member 64 to move towards the slide member 57 when the sheet of packaging machine 41 in interposed between the pushing member 64 and the plate 50.

In this way, the pushing member 64 is able to push the sheet of packaging material 41 against the plate 50.

The sheet of packaging material 41 is received between the pushing member 64 and the plate 50 and is pressed by the pushing member 64 against the plate 50.

The pushing member 64 comprises a pushing element 68, which interacts with the sheet of packaging material 41, and a supporting element 67, which faces the body 61 and supports the pushing element 68.

The resilient element 65 are interposed between the body 61 and the supporting element 67.

The pushing element 68 is connected to the supporting element 67 by means of fastening elements 69.

The pushing element 68 extends from the supporting element 67 towards the plate 50.

The pushing element 68 may be made of a low-friction material. In this way, the slide member 57 may be manually moved along the guiding arrangement 51 in a simple and easy way - by an operator. In addition, the risk that the pushing element 68 may damage the sheet of packaging material 41 is reduced.

In another embodiment, the entire pushing member 64 may be made of a low-friction material.

The pushing member 64 comprises a hole (not shown) through which the cutting tool 58 passes. In particular, the front portion 59 passes through the hole. In this way, the cutting tool 58 fixed to the slide member 57, i.e. to the body 61, may interact with the sheet of packaging material 41 without interfering with the pushing member 64. In particular, owing to the hole, the cutting tool 58 does not prevent the pushing member 64 from moving with respect to the slide 57.

The hole extends through the supporting element 67 and the pushing element 68.

During operation, the sheet of packaging material 41 is positioned on the plate 50.

The first side surface 45 faces towards the slide member 57.

The second side surface 48 faces towards the plate 50. In particular, the second side surface 48 rests on the plate 50.

The slide member 57 is moved along the guiding arrangement 51 from the first end region 52 to the second end region 53 so that the cutting tool 58 cuts the sheet of packaging material 41.

In this way, an undercut surface 49 is formed in the sheet of packaging material.

The undercut surface 49 forms with the first side surface 45 an acute angle α.

The cutting tool 58 cuts the sheet of packaging material 41, while the pushing member 64 mounted on the slide member 57 presses the sheet of packaging material 41 on the plate 50. In particular, the pushing member 64 keeps the sheet of packaging material 41 in a planar configuration and prevents detachment of the sheet of packaging material 41 from the plate 50 and/or deformation of the sheet of packaging material 41.

In this way, the value of the angle α substantially corresponds to a desired nominal value, i.e. the value of the angle β formed by the cutting tool and the plane A. This because the sheet of packaging material does not move with respect to the plate 50 during the cutting operation.

Clearly, changes may be made to the cutting unit as described and illustrated herein without, however, departing from the scope defined in the accompanying claims.

## Claims

1. Cutting device for cutting a sheet of packaging material (41), comprising a plate (50) arranged for receiving said sheet of packaging material (41), a guiding arrangement (51) extending across said plate (50), a slide member (57) movable on said guiding arrangement (51) and supporting a cutting tool (58) arranged for cutting said sheet of packaging material (41), said cutting tool (58) forming an acute angle (β) with respect to a plane (A) defined by said plate, said cutting tool (58) comprising a rear portion connected to said slide member (57) and a front portion (59) protruding from said slide member (57) and at least partly received in a groove (60) of said plate (50), **characterized in that** said slide member (57) also supports a pushing member (64) arranged for pushing said sheet of packaging material (41) against said plate (50).

2. Cutting device according to any one of the preceding claims, wherein said pushing member (64) is made of a low-friction material.

3. Cutting device according to claim 1, or 2, wherein said pushing member (64) is movable together with said slide member (57) along said guiding arrangement (51).

4. Cutting device according to any one of the preceding claims, wherein said pushing member (64) is movable with respect to said slide member (57) so as to push said sheet of packaging material (41) against said plate (50).

5. Cutting tool according to claim 4, wherein guide elements are interposed between said slide member (57) and said pushing member (64) so as to guide movement of said pushing member (64) with respect to said slide member (57).

6. Cutting tool according to claim 5, wherein said guide elements project from said slide member (57) towards said plate (50).

7. Cutting tool according to any one of claims 4 to 6, wherein resilient elements (65) are interposed between said slide member (57) and said pushing member (64).

8. Cutting device according to claim 7, wherein said pushing member (64) comprises a pushing element (68), which is arranged for interacting with said sheet of packaging material (41), and a supporting element (67), which faces a body (61) of said slide member (57) and supports said pushing element (68), said resilient elements (65) being interposed between said body (61) and said supporting element (67).

9. Cutting element according to claim 8, wherein said pushing element (68) extends from said supporting element (67) towards said plate (50).

10. Cutting device according to claim 8, or 9, wherein said pushing element (68) is made of a low-friction material.

11. Cutting element according to any one of the preceding claim, wherein said pushing member (64) comprises a hole through which said cutting tool (58) passes.

12. Cutting device according to anyone of the preceding claims, wherein said guiding arrangement (51) extends between a first end region (52) of said plate (50) and a second end region (53) of said plate (50), opposite said first end region (52) .

13. Cutting device according to claim 12, wherein said guiding arrangement (51) comprises a bar (54) supported by a first supporting block (55) fixed to said plate (50) at said first end region (52) and by a second supporting block (56) fixed to said plate (50) at said second end region (53).

14. Cutting device according to any one of the preceding claims, wherein said groove (60) is parallel to said guiding arrangement (51).
